(19) **Europäisches Patentamt**
**European Patent Office**
**Office européen des brevets**

(11) **EP 2 472 270 B1**

(12) **EUROPEAN PATENT SPECIFICATION**

(45) Date of publication and mention
of the grant of the patent:
**18.02.2015 Bulletin 2015/08**

(51) Int Cl.:
*B60W 40/105* *(2012.01)*     *G01P 21/02* *(2006.01)*
*G01P 3/56* *(2006.01)*     *G01P 3/50* *(2006.01)*
*G08G 1/16* *(2006.01)*     *B60W 50/14* *(2012.01)*
*G08G 1/052* *(2006.01)*     *G08G 1/0967* *(2006.01)*

(21) Application number: **11193590.4**

(22) Date of filing: **14.12.2011**

(54) **Method and system for speed verification**

Verfahren und System zur Geschwindigkeitsüberprüfung

Procédé et système de vérification de vitesse

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.01.2011 SE 1150002**

(43) Date of publication of application:
**04.07.2012 Bulletin 2012/27**

(73) Proprietor: **Scania CV AB**
**151 87 Södertälje (SE)**

(72) Inventors:
• **Andersson, Jon**
**144 62 Rönninge Södertälje (SE)**

• **Sahlholm, Per**
**141 45 Huddinge (SE)**
• **Gustavsson, Håkan**
**141 69 Huddinge (SE)**
• **Pattersson, Henrik**
**141 73 Segeltorp (SE)**
• **Schauman, Henrik**
**168 69 Bromma (SE)**
• **AL ALAM, Assad**
**121 31 Enskededalen (SE)**

(56) References cited:
**JP-A- 2001 341 664     JP-A- 2006 163 615**

**Description**

<u>Field of the invention</u>

The present invention relates to a method and a system for verifying a vehicle's speed according to the preambles of the independent claims.

<u>Background to the invention</u>

A vehicle's measured speed is used by many different functions in the vehicle, e.g. visual presentation of current speed to the driver, storage of speeds over time in tachographs and storage of vehicle operating time. For various reasons someone may wish to manipulate speed data in order to give misleading information. On heavy vehicles there is usually a statutory speed bar which refers to measured speed of the vehicle. Manipulating the speed recorded by the tachograph might enable the driver to exceed regulated driving and rest times. Incorrectly measured speed might also arise from wear of, for example, the vehicle's tyres.

At the present time it is difficult to verify the actual speed of a vehicle. FR 2827953 describes a process for correcting a vehicle's measured speed by verifying it on the basis of distance measurements by GPS (Global Positioning System). By doing several verifications it is thus possible to arrive at an average error which can be then be applied to correct the vehicle's speed. JP 2006163615 describes a vehicle speed detecting device where the speed of the preceding vehicle is measured and sent to following vehicles to be used for regulating the speed of following vehicles. Another example is described in JP 2001341664 which describes a method for detecting sensor failure of a vehicle. Information from another vehicle is used for comparison with information in the own vehicle, such as speed information.

JP 11173867 describes a device for detecting an itinerary, with a measuring element which uses Doppler radar to measure a vehicle's speed by means of radio waves. A GPS system is used to measure the absolute speed and the location of the vehicle. An error correcting element corrects errors incorporated in the Doppler radar speed measurement by using measurements of the vehicle's speed by the GPS system. JP04142480 also describes correction of a vehicle's measured speed by means of data from GPS.

The systems indicated above use two different sensor systems to ensure correct speed indications. Having two sensor systems is an expensive way of ensuring a vehicle's speed, nor is it always possible. Incorrect speed indications conveyed to functions of a vehicle, e.g. to functions which relate to its power train, may cause damage to the power train.

The object of the invention is to propose an improved method for ensuring a vehicle's speed.

<u>Summary of the invention</u>

The object described above is achieved by a method according to claim 1 for verifying the speed of a vehicle A among a number of vehicles adapted to communicate with one another by V2V (vehicle-to-vehicle) communication or to communicate between vehicle and infrastructure by V2I (vehicle-to-infrastructure) communication.

The method provides a way of verifying a vehicle's actual speed without having to install two separate sensor systems in the vehicle. A vehicle B or several nearby vehicles thus use V2V or V2I communication to send information which relates to their speeds, making it possible to verify by comparison the vehicle's own speed. The driver may thus be warned if the speed indications of his/her vehicle are not correct. A verified speed for the vehicle which is usable by its internal functions may also be arrived at. The verification may also be logged to enable subsequent identification of speed indication errors. The invention thus makes it possible to avoid the problem that the vehicle's speed indications might have been manipulated.

Communication between vehicles, so-called V2V communication, and between vehicle and infrastructure, so-called V2I communication, are techniques developed within a number of global projects between various participants in the vehicle industry. Examples of such projects are CVIS (Cooperative Vehicle Infrastructure Systems), Safespot and CoCAR (Cooperative Cars). These systems are based on communication with WLAN (Wireless Local Area Network) and GPRS (General Packet Radio Service). The communication is two-way, i.e. from and to a vehicle and from and to another vehicle or infrastructure.

According to another aspect, the object is achieved by a system according to claim 8 for verifying the speed of a vehicle A.

Preferred embodiments are described in the dependent claims and the detailed description.

<u>Brief description of the attached drawings</u>

The invention is described below with reference to the attached drawings, in which:

Figure 1 is a flowchart for a method according to an embodiment of the invention.
Figure 2 illustrates V2V communication between vehicles A and B.
Figure 3 depicts a system according to an embodiment of the invention.

Detailed description of preferred embodiments of the invention

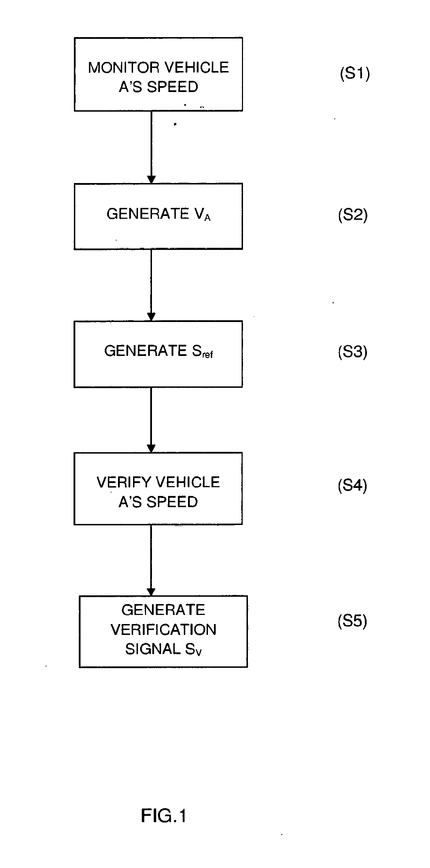

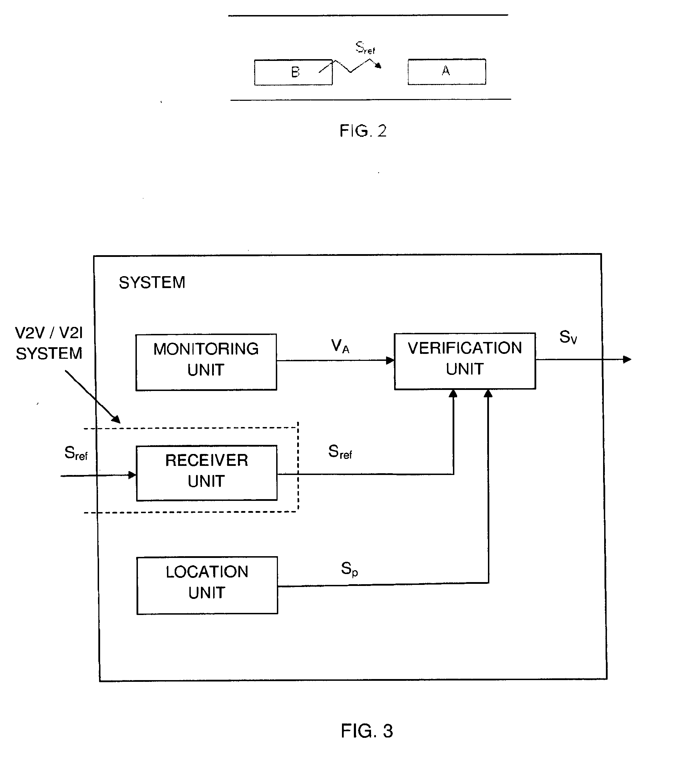

Figure 1 is a flowchart for a method for verifying the speed of a vehicle A among a number of vehicles adapted to communicate with one another by V2V (vehicle-to-vehicle) communication or between vehicle and infrastructure by V2I (vehicle-to-infrastructure) communication, as will now be described in more detail. The vehicles may of course be adapted to both V2V and V2I communication. Figure 2 depicts an example of a vehicle situation in which vehicles communicate by V2V. As a first step S1, vehicle A's speed is monitored and as a second step S2 a speed signal $V_A$ which presents the vehicle's speed is generated. Vehicle A preferably has a speed sensor which monitors its speed. As a third step S3 a reference signal $S_{ref}$ comprising information about the speed of at least one other vehicle B is generated. According to an embodiment, said reference signal $S_{ref}$ indicates a relative speed difference $\Delta V$ between vehicles A and B, and the speed $V_B$ of vehicle B. Vehicle B monitor its speed $V_B$ and $\Delta V$ by means, for example, of a radar unit or camera unit in the vehicle. According to another embodiment, said reference signal $S_{ref}$ indicates only the speed of vehicle B. Vehicle B preferably monitors its speed $V_B$ by means of a speed sensor of its own. $S_{ref}$ is sent by V2V communication to vehicle A, or by V2I communication to an external unit which does the verification. If an external unit does the verification, the speed signal $V_A$ is also sent to it. V2I and V2I communication may be conducted, for example, via WLAN or GPRS. As a fourth step S4, vehicle A's speed is verified on the basis of said speed signal $V_A$ and reference signal $S_{ref}$ and as a fifth step S5 a verification signal $S_v$ is generated on the basis thereof. Vehicle A's speed can thus be verified.

If $S_{ref}$ indicates a relative speed difference $\Delta V$, this difference may be used to calculate an estimate of vehicle A's actual speed $V_{A\_ref}$ as

$$V_{A\_ref} = V_B + \Delta V \qquad (1)$$

A difference between estimated speed $V_{A\_ref}$ and measured speed $V_A$ will indicate that vehicle A's speed is not being correctly presented by the vehicle.

If $S_{ref}$ indicates only vehicle B's speed $V_B$, what is then investigated is whether the difference between $V_A$ and $V_B$ is less than a limit value d as follows:

$$|V_A - V_B| < d \qquad (2)$$

If the difference is less than d, it may, according to an embodiment, be assumed that the speeds of vehicle A and vehicle B are equal and that vehicle A's speed has been measured correctly. An estimate of vehicle A's actual speed $V_{A\_ref}$ may be calculated as $V_B \pm$ the difference between $V_A$ and $V_B$ depending on whether the difference between them is negative or positive.

The estimated value $V_{A\_ref}$ may then be used to assess the correctness of the measured speed $V_A$ and thus to verify vehicle A's speed. To assess whether it is the estimate or the measured speed which is incorrect in cases where they are not equal, reference speeds $V_{A-ref}$ are preferably created against at least two different vehicles. The reference values from a number of vehicles in vehicle A's neighbourhood may then be used to verify its speed. According to an embodiment, a mean value for vehicle A's estimated speed is calculated on the basis of a number of estimated values of its speed which are derived from a number of nearby vehicles.

The result of the verification of vehicle A's speed is presented, according to an embodiment, to its driver via a display in the instrument panel in the form of a message that the vehicle's speed is not being correctly indicated. A verified value of vehicle A's speed may also be determined on the basis of said verification. It may be displayed to the driver as the vehicle's actual speed $V_{A\_ref}$ and be used internally in the vehicle by various functions. If the verification indicates that vehicle A has an incorrect speed indication, the method according to an embodiment may impose limitations upon the vehicle on the basis of the result of the verification of its speed, e.g. its power output might be limited to cause the driver to take the vehicle in for workshop repair.

To be able to compare speeds of vehicles, the difference between their locations should preferably not change appreciably during a certain period of travelling time. According to the invention, the method comprises determining the locations of vehicles A and B, comparing the difference between their locations over a period of time t with a threshold value Tp and generating a location verification signal $S_p$ which presents said comparison over the period of time. If the comparison shows that the location difference between the vehicles over the period t has not changed more than the predetermined threshold value $T_p$, it is assumed that the difference between their speeds is negligible. The vehicle locations may for example be indicated via GPS (Global Positioning System). The location difference may be calculated as follows:

$$|P_A - P_B| < T_p \text{ over the time t} \qquad (3)$$

If the absolute amount of the difference between the locations of the vehicles changes by more than Tp during the period t, the speed of vehicle B cannot be used to verify vehicle A's speed, since they cannot be assumed to be the same. $S_p$ may for example indicate whether $T_p$ has or has not been exceeded during the period t. If it has been exceeded in the case of a particular vehicle B, the reference value from that vehicle is preferably not taken into account in the verification of vehicle A's speed.

According to an embodiment, the reference signal also presents vehicle B's identity. This makes it possible to verify that vehicle B is in the vicinity of vehicle A and that it really is a vehicle.

The invention comprises also a system for verifying the speed of a vehicle A. An example of a block diagram for the system appears in Figure 3 and will now be explained with reference to that diagram. The system comprises a V2V system adapted to communication between vehicles, or a V2I (vehicle-to-infrastructure) system adapted to communication between vehicle and infrastructure. The examples refer to vehicles A and B but the system may preferably comprise a larger number of vehicles communicating with one another, provided that they are adapted to V2V communication. The vehicles may instead, or in addition, be adapted to V2I communication to make verification possible externally from the vehicles. The system comprises also a monitoring unit adapted to monitor vehicle A's speed and generate a speed signal $V_A$ which presents the vehicle's speed. The monitoring unit may for example comprise a speed sensor which indicates the vehicle's speed. Said V2V or V2I system also comprises a receiver unit adapted to receive from at least one other vehicle B in vehicle A's neighbourhood at least one reference signal $S_{ref}$ which contains information about at least the speed of vehicle B. The reference signal indicates, according to an embodiment, a relative speed difference $\Delta V$ between said vehicles A and B, and vehicle B's speed $V_B$, but according to another embodiment it indicates only vehicle B's speed $V_B$, as described above with reference to equations (1) and (2). The system comprises also a verification unit adapted to verify vehicle A's speed based on said speed signal $V_A$ and reference signal $S_{ref}$ and to generate on the basis thereof a verification signal $S_v$.

According to the invention, the system comprises a location unit adapted to receive information about the locations of vehicles A and B, compare the difference between their locations over a period of time t with a threshold value $T_p$ and generate a location verification signal $S_p$ which indicates said comparison over that period. The locations may be obtained by means of a positioning system, e.g. GPS. Locations from other vehicles may also be indicated in the reference signal $S_{ref}$. The difference between the locations may be calculated according to equation (3). The system may thus verify that the speeds of vehicles A and B can be compared. The verification signal $S_p$ may for example be used to inform the verification unit about whether vehicle B's reference signal $S_{ref}$ can or cannot be used to verify vehicle A's speed.

The system may also comprise a display in the instrument panel, via which the result of the verification of vehicle A's speed can be presented to the driver. The verification unit may be adapted to determine a verified value of vehicle A's speed based on said verification, and this verified value may for example be presented to the driver via the display in the form of a verified value of the vehicle's speed and/or may be used by the vehicle's internal functions. The system is adapted according to an embodiment to imposing limitations upon vehicle A based on the result of the verification of its speed. If it is found that the vehicle's indicated speed $V_A$ is not correct, it is for example possible for its engine power to be limited.

The invention comprises also a computer program product comprising program instructions for enabling a computer system in a vehicle to perform steps according to the method described above when those instructions are run on said computer system. The invention relates also to a computer program product in which the program instructions are stored on a medium which can be read by a computer system.

The present invention is not restricted to the embodiments described above. Sundry alternatives, modifications and equivalents may be used. The aforesaid embodiments therefore do not limit the invention's scope which is defined by the attached claims.

**Claims**

**1.** A method for verifying the speed of a vehicle A among a number of vehicles adapted to communicate with one another by V2V (vehicle-to-vehicle) communication or to communicate between vehicle and infrastructure by V2I (vehicle-to-infrastructure) communication, which method comprises

- monitoring vehicle A's speed and generating a speed signal $V_A$ which presents the vehicle's speed;
- generating a reference signal $S_{ref}$ which contains information about a speed $V_B$ of at least one other vehicle B;
- determining a location $P_A$ for vehicle A;
- determining a location $P_B$ for vehicle B;
- determining a location difference between the location $P_A$ for vehicle A and the location $P_B$ for vehicle B over a period of time t;
- comparing the location difference with a predetermined threshold value Tp over the period of time t and determining if the location difference has not changed more than the predetermined threshold value Tp over the period of time t;
- generating a location verification signal $S_p$ which represents said comparison over the period of time t;
- verifying vehicle A's speed based on said speed signal $V_A$, reference signal $S_{ref}$ and location verification signal $S_p$;
- generating a verification signal $S_v$ on the basis of said verifying.

2. A method according to claim 1, whereby said reference signal indicates a relative speed difference $\Delta V$ between vehicles A and B.

3. A method according to any one of the foregoing claims, comprising the reference signal presenting also vehicle B's identity.

4. A method according to any one of the foregoing claims, comprising presenting the result of the verification of vehicle A's speed to its driver.

5. A method according to any one of the foregoing claims, comprising imposing limitations upon vehicle A based on the result of the verification of its speed.

6. A method according to any one of the foregoing claims, comprising determining a verified value of vehicle A's speed based on said verification.

7. A method according to claim 6, comprising

- creating reference speeds $V_{A\_ref}$ against at least two different vehicles;
- verify vehicle A's speed based on the created reference speeds.

8. A system for verifying the speed of a vehicle A, **characterised in that** the system comprises:

- a V2V (vehicle-to-vehicle) system adapted to communicate between vehicles or a V2I (vehicle-to-infrastructure) system adapted to communicate between vehicle and infrastructure;
- a monitoring unit adapted to monitor vehicle A's speed and generate a speed signal $V_A$ which presents the vehicle's speed;
- a receiver unit in said V2V or V2I system which is adapted to receive from at least one other vehicle B in vehicle A's neighbourhood at least one reference signal $S_{ref}$ which contains information about at least the speed $V_B$ of vehicle B;
- a location unit adapted to determine a location $P_A$ of vehicle A and a location $P_B$ of vehicle B and to determine the location difference between the location $P_A$ of said vehicle A and the location $P_B$ of said vehicle B over a period of time t, to compare the location difference with a predetermined threshold value $T_p$ over the period of time t and to determine if the location difference has not changed more than the predetermined threshold value $T_p$ over the period of time t, and to generate a location verification signal $S_p$ which represents said comparison over the period of time t;
- a verification unit adapted to verify vehicle A's speed based on said speed signal $V_A$, reference signal $S_{ref}$ and said location verification signal $S_p$, and to generate a verification signal $S_v$ on the basis of said verifying.

9. A system according to claim 8, whereby said reference signal indicates a relative speed difference $\Delta V$ between vehicles A and B.

**10.** A system according to any one of claims 8 to 9, in which the reference signal $S_{ref}$ indicates also vehicle B's identity.

**11.** A system according to any one of claims 8 to 10, adapted to present the result of the verification of vehicle A's speed to its driver.

**12.** A system according to any one of claims 8 to 11, adapted to impose limitations upon vehicle A based on the result of the verification of its speed.

**13.** A system according to any one of claims 8 to 12, in which the verification unit is adapted to determine a verified value of vehicle A's speed based on said verification.

**14.** A system according to claim 13, wherein the verification unit is adapted to:

- create reference speeds $V_{A\_ref}$ against at least two different vehicles;
- verify vehicle A's speed based on the created reference speeds.

**15.** A computer program product comprising program instructions for enabling a computer system in a vehicle to perform steps according to the method of any of claims 1 to 7 when those instructions are run on said computer system.

**16.** A computer program product according to claim 15, in which the program instructions are stored on a medium which can be read by a computer system.


**Patentansprüche**

**1.** Verfahren zum Überprüfen der Geschwindigkeit eines Fahrzeugs A unter mehreren Fahrzeugen, welche ausgebildet sind, um miteinander über V2V (Fahrzeug-zu-Fahrzeug, engl.: *vehicle-to-vehicle*)-Kommunikation zu kommunizieren oder um zwischen einem Fahrzeug und einer Infrastruktur über V2I (Fahrzeug-zu-Infrastruktur, engl.: *vehicle-to-infrastructure*)-Kommunikation zu kommunizieren, das Verfahren umfassend

- Überwachen der Geschwindigkeit des Fahrzeugs A und Erzeugen eines Geschwindigkeitssignals $V_A$, welches die Geschwindigkeit des Fahrzeugs darstellt;
- Erzeugen eines Referenzsignals $S_{ref}$, welches Informationen zu einer Geschwindigkeit $V_B$ zumindest eines anderen Fahrzeugs B enthält;
- Bestimmen eines Standorts $P_A$ des Fahrzeugs A;
- Bestimmen eines Standorts $P_B$ des Fahrzeugs B;
- Bestimmen einer Standortdifferenz zwischen dem Standort $P_A$ des Fahrzeugs A und dem Standort $P_B$ des Fahrzeugs B über einen Zeitraum t;
- Vergleichen der Standortdifferenz mit einem vorbestimmten Grenzwert $T_p$ über den Zeitraum t, und Bestimmen, ob sich die Standortdifferenz über den Zeitraum t nicht um mehr als den vorbestimmten Grenzwert $T_p$ geändert hat;
- Erzeugen eines Standort-Überprüfungssignals $S_p$, welches den Vergleich über den Zeitraum t repräsentiert;
- Überprüfen der Geschwindigkeit des Fahrzeugs A basierend auf dem Geschwindigkeitssignal $V_A$, dem Referenzsignal $S_{ref}$ und dem Standort-Überprüfungssignal $S_p$;
- Erzeugen eines Überprüfungssignals $S_v$ auf Basis des Überprüfens.

**2.** Verfahren nach Anspruch 1, wobei das Referenzsignal auf eine relative Geschwindigkeitsdifferenz $\Delta V$ zwischen den Fahrzeugen A und B hindeutet.

**3.** Verfahren nach einem der vorangehenden Ansprüche, umfassend, dass das Referenzsignal auch eine Identität des Fahrzeugs B darstellt.

**4.** Verfahren nach einem der vorangehenden Ansprüche, umfassend, dass das Ergebnis der Überprüfung der Geschwindigkeit des Fahrzeugs A seinem Fahrer dargestellt wird.

**5.** Verfahren nach einem der vorangehenden Ansprüche, umfassend, dass dem Fahrzeug A basierend auf dem Ergebnis der Überprüfung seiner Geschwindigkeit Beschränkungen vorgegeben werden.

**6.** Verfahren nach einem der vorangehenden Ansprüche, umfassend, dass basierend auf der Überprüfung ein überprüfter Wert der Geschwindigkeit des Fahrzeugs A bestimmt wird.

**7.** Verfahren nach Anspruch 6, umfassend

- Erstellen von Referenzgeschwindigkeiten $V_{A\_ref}$ bezüglich zumindest zwei verschiedenen Fahrzeugen;
- Überprüfen der Geschwindigkeit des Fahrzeugs A basierend auf den erzeugten Referenzgeschwindigkeiten.

**8.** System zum Überprüfen der Geschwindigkeit eines Fahrzeugs A, **dadurch gekennzeichnet, dass** das System umfasst:

- ein V2V (Fahrzeug-zu-Fahrzeug, engl.: *vehicle-to-vehicle*)-System, welches zum Kommunizieren zwischen Fahrzeugen ausgebildet ist, oder ein V2I (Fahrzeug-zu-Infrastruktur, engl.: *vehicle-to-infrastructure*)-System, welches zum Kommunizieren zwischen einem Fahrzeug und einer Infrastruktur ausgebildet ist;
- eine Überwachungseinheit, welche ausgebildet ist, um die Geschwindigkeit des Fahrzeugs A zu überwachen, und um ein Geschwindigkeitssignal $V_A$ zu erzeugen, welches die Geschwindigkeit des Fahrzeugs darstellt;
- eine Empfängereinheit in dem V2V- oder in dem V2I-System, welche ausgebildet ist, um von zumindest einem anderen Fahrzeug B in der Umgebung des Fahrzeugs A zumindest ein Referenzsignal $S_{ref}$ zu empfangen, welches Informationen zu zumindest der Geschwindigkeit $V_B$ des Fahrzeugs B enthält;
- eine Standorteinheit, welche ausgebildet ist, um einen Standort $P_A$ des Fahrzeugs A und einen Standort $P_B$ des Fahrzeugs B zu bestimmen, und um über einen Zeitraum t die Standortdifferenz zwischen dem Standort $P_A$ des Fahrzeugs A und dem Standort $P_B$ des Fahrzeugs B zu bestimmen, um die Standortdifferenz über den Zeitraum t mit einem vorbestimmten Grenzwert $T_p$ zu vergleichen, und um zu bestimmen, ob sich die Standortdifferenz über den Zeitraum t nicht um mehr als den vorbestimmten Grenzwert $T_p$ geändert hat, und um ein Standort-Überprüfungssignal $S_p$ zu erzeugen, welches den Vergleich über den Zeitraum t repräsentiert;
- eine Überprüfungseinheit, welche ausgebildet ist, um die Geschwindigkeit des Fahrzeugs A basierend auf dem Geschwindigkeitssignal $V_A$, dem Referenzsignal $S_{ref}$ und dem Standortüberprüfungssignal $S_p$ zu überprüfen, und um ein Überprüfungssignal $S_v$ auf Basis des Überprüfens zu erzeugen.

**9.** System nach Anspruch 8, wobei das Referenzsignal auf eine relative Geschwindigkeitsdifferenz $\Delta V$ zwischen den Fahrzeugen A und B hindeutet.

**10.** System nach einem der Ansprüche 8 bis 9, wobei das Referenzsignal $S_{ref}$ auch auf eine Identität des Fahrzeugs B hindeutet.

**11.** System nach einem der Ansprüche 8 bis 10, ausgebildet, um das Ergebnis der Überprüfung der Geschwindigkeit des Fahrzeugs A seinem Fahrer darzustellen.

**12.** System nach einem der Ansprüche 8 bis 11, ausgebildet, um dem Fahrzeug A basierend auf dem Ergebnis der Überprüfung seiner Geschwindigkeit Beschränkungen vorzugeben.

**13.** System nach einem der Ansprüche 8 bis 12, wobei die Überprüfungseinheit ausgebildet ist, um basierend auf der Überprüfung einen überprüften Wert der Geschwindigkeit des Fahrzeugs A zu bestimmen.

**14.** System nach Anspruch 13, wobei die Überprüfungseinheit ausgebildet ist zum:

- Erstellen von Referenzgeschwindigkeiten $V_{A\_ref}$ bezüglich zumindest zwei verschiedenen Fahrzeugen;
- Überprüfen der Geschwindigkeit des Fahrzeugs A basierend auf den erzeugten Referenzgeschwindigkeiten.

**15.** Computerprogrammprodukt, umfassend Programmbefehle zum Befähigen eines Computersystems in einem Fahrzeug, die Schritte gemäß dem Verfahren nach einem der Ansprüche 1 bis 7 durchzuführen, wenn die Befehle vom Computersystem ausgeführt werden.

**16.** Computerprogrammprodukt nach Anspruch 15, wobei die Programmbefehle auf einem Medium gespeichert sind, welches von einem Computersystem lesbar ist.

**Revendications**

1. Procédé de vérification de la vitesse d'un véhicule A parmi un nombre de véhicules conçus pour communiquer entre eux par communication V2V (de véhicule à véhicule) ou pour communiquer entre véhicule et infrastructure par communication V2I (de véhicule à infrastructure), lequel procédé comprend les étapes suivantes :

   - surveiller la vitesse du véhicule A et générer un signal de vitesse VA représentatif de la vitesse du véhicule ;
   - générer un signal de référence $S_{ref}$ contenant des informations relatives à une vitesse $V_B$ d'au moins un autre véhicule B ;
   - déterminer une position $P_A$ du véhicule A ;
   - déterminer une position $P_B$ du véhicule B ;
   - déterminer une différence de position entre la position $P_A$ du véhicule A et la position $P_B$ du véhicule B dans un laps de temps t ;
   - comparer la différence de position avec une valeur seuil prédéterminée $T_P$ dans le laps de temps t et déterminer si la différence de position n'a pas varié d'une valeur supérieure à la valeur seuil prédéterminée $T_P$ dans le laps de temps t ;
   - générer un signal de vérification de position $S_P$ qui représente ladite comparaison dans le laps de temps t ;
   - vérifier la vitesse du véhicule A sur la base dudit signal de vitesse $V_A$, dudit signal de référence $S_{ref}$ et dudit signal de vérification de position $S_P$;
   - générer un signal de vérification $S_V$ sur la base de ladite vérification.

2. Procédé selon la revendication 1, dans lequel ledit signal de référence indique une différence de vitesse relative ΔV entre les véhicules A et B.

3. Procédé selon l'une quelconque des revendications précédentes, dans lequel le signal de référence présente également l'identité du véhicule B.

4. Procédé selon l'une quelconque des revendications précédentes, comprenant une étape de présentation du résultat de la vérification de la vitesse du véhicule A à son conducteur.

5. Procédé selon l'une quelconque des revendications précédentes, comprenant une étape d'imposition de limitation de vitesse au véhicule A sur la base du résultat de la vérification de sa vitesse.

6. Procédé selon l'une quelconque des revendications précédentes, comprenant une étape de détermination d'une valeur vérifiée de la vitesse du véhicule A sur la base de ladite vérification.

7. Procédé selon la revendication 6, comprenant les étapes :

   - créer des vitesses de référence $V_{A\_ref}$ par rapport à au moins deux véhicules différents ;
   - vérifier la vitesse du véhicule A sur la base des vitesses de référence créées.

8. Système de vérification de la vitesse d'un véhicule A, **caractérisé en ce que** le système comprend :

   - un système V2V (de véhicule à véhicule) conçu pour communiquer entre véhicules ou un système V2I (de véhicule à infrastructure) conçu pour communiquer entre véhicule et infrastructure ;
   - une unité de surveillance adaptée à surveiller la vitesse du véhicule A et à générer un signal de vitesse VA représentatif de la vitesse du véhicule;
   - une unité réceptrice dans ledit système V2V ou V2I, adaptée à recevoir d'au moins un autre véhicule B se trouvant dans le voisinage du véhicule A au moins un signal de référence $S_{ref}$ qui contient des informations relatives à au moins la vitesse $V_B$ du véhicule B ;
   - une unité de localisation adaptée à déterminer une position $P_A$ du véhicule A et une position $P_B$ du véhicule B et à déterminer la différence de position entre la position $P_A$ dudit véhicule A et la position $P_B$ dudit véhicule B dans un laps de temps t, à comparer la différence de position avec une valeur seuil prédéterminée $T_P$ dans le laps de temps t et à déterminer si la différence de position n'a pas varié d'une valeur supérieure à la valeur seuil prédéterminée $T_P$ dans le laps de temps t, et de générer un signal de vérification de position $S_P$ qui représente ladite comparaison dans le laps de temps t ;
   - une unité de vérification adaptée à vérifier la vitesse du véhicule A sur la base dudit signal de vitesse VA, dudit signal de référence $S_{ref}$ et dudit signal de vérification de position $S_P$; et pour générer un signal de vérification

$S_V$ sur la base de ladite vérification.

9.  Système selon la revendication 8, dans lequel ledit signal de référence indique une différence de vitesse relative ∆V entre les véhicules A et B.

10.  Système selon l'une quelconque des revendications 8 à 9, dans lequel le signal de référence $S_{ref}$ indique également l'identité du véhicule B.

11.  Système selon l'une quelconque des revendications 8 à 10, adapté à présenter le résultat de la vérification de la vitesse du véhicule A à son conducteur.

12.  Système selon l'une quelconque des revendications 8 à 11, adapté à imposer des limitations de vitesse au véhicule A sur la base du résultat de la vérification de sa vitesse.

13.  Système selon l'une quelconque des revendications 8 à 12, dans lequel l'unité de vérification est adaptée à déterminer une valeur vérifiée de la vitesse du véhicule A sur la base de ladite vérification.

14.  Système selon la revendication 13, dans lequel l'unité de vérification est adaptée à :

    - créer des vitesses de référence VA_ref par rapport à au moins deux véhicules différents ;
    - vérifier la vitesse du véhicule A sur la base des vitesses de référence créées.

15.  Programme d'ordinateur comprenant des instructions de programme permettant à un système informatique dans un véhicule d'exécuter des étapes du procédé selon l'une quelconque des revendications 1 à 7, lorsque lesdites instructions sont exécutées sur ledit système informatique.

16.  Programme d'ordinateur selon la revendication 15, dans lequel les instructions de programme sont stockées sur un support pouvant être lu par un système informatique.

MONITOR VEHICLE
A'S SPEED

(S1)

GENERATE $V_A$

(S2)

GENERATE $S_{ref}$

(S3)

VERIFY VEHICLE
A'S SPEED

(S4)

GENERATE
VERIFICATION
SIGNAL $S_V$

(S5)

FIG.1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2827953
- JP 2006163615 B
- JP 2001341664 B
- JP 11173867 B
- JP 04142480 B